# EUROPEAN PATENT APPLICATION

(11) **EP 4 575 790 A1**
(43) Date of publication of application: **25.06.2025**
(21) Application number: 23867096.2
(22) Date of filing: 11.07.2023
(51) Int. Cl.: G06F 9/54

(54) **DATA TRANSMISSION METHOD AND SYSTEM IN AGGREGATION COMMUNICATION**

(30) Priority: 22.09.2022 CN 202211160846
(71) Applicant: Huawei Technologies Co., Ltd., Shenzhen, Guangdong 518129 (CN)
(72) Inventor: DUAN, Qihang, Shenzhen, Guangdong 518129 (CN); WANG, Junsong, Shenzhen, Guangdong 518129 (CN)
(74) Representative: Maiwald GmbH
(86) International application number: PCT/CN2023/106780
(87) International publication number: WO 2024/060801

(57) **Abstract**

This application relates to the field of distributed computing, and provides a data transmission method in collective communication and a system. The method includes: A first computing device obtains a send index list of the first computing device, where the send index list indicates information about a second computing device corresponding to each of a plurality of data blocks to be sent by the first computing device, and the information about the second computing device indicates a computing device that receives each data block; the first computing device separately sends the plurality of data blocks to a plurality of second computing devices based on the send index list; and the plurality of second computing devices separately receive the plurality of data blocks, where data blocks received by each second computing device are consecutive data blocks. **In** this data transmission process, data block copy is not required, which saves time for transmitting non-consecutive data blocks between different processes, thereby resolving a problem of high time consumption in a communication phase, and breaking through a performance bottleneck of distributed computing.

## Description

This application claims priority to Chinese Patent Application No. 202211160846.2, filed on September 22, 2022 and entitled "DATA TRANSMISSION METHOD IN COLLECTIVE COMMUNICATION AND SYSTEM", which is incorporated herein by reference in its entirety.

### TECHNICAL FIELD

This application relates to the field of distributed computing, and in particular, to a data transmission method in collective communication and a system.

### BACKGROUND

With development of information technologies, collective communication plays an increasingly important role in the field of distributed computing. The collective communication can implement all-to-all (all-to-all) data transmission between different processes of distributed computing. In a related technology, all-to-all transmission may be directly performed on consecutively arranged data between different processes, while non-consecutively arranged data needs to be copied and combined before all-to-all transmission is performed between different processes. However, in many distributed computing scenarios, data that needs to be transmitted between different processes is arranged non-consecutively. However, the current collective communication method in which copy is performed before transmission is time-consuming, making a communication phase become a time-consuming bottleneck of distributed computing.

### SUMMARY

Embodiments of this application provide a data transmission method in collective communication and a system, which saves time for transmitting non-consecutive data between different processes, thereby resolving a problem of high time consumption in a communication phase, and breaking through a performance bottleneck of distributed computing. The technical solutions are as follows.

According to a first aspect, a data transmission method in collective communication is provided, and is applied to a computing system. The computing system includes a plurality of computing devices, and the method includes: A first computing device in the plurality of computing devices obtains a send index list of the first computing device, where the send index list indicates information about a second computing device corresponding to each of a plurality of data blocks to be sent by the first computing device, the information about the second computing device indicates a computing device that receives each data block, a quantity of second computing devices is N, and N is a positive integer greater than or equal to 2; the first computing device separately sends the plurality of data blocks to the N second computing devices based on the send index list; and the N second computing devices separately receive the plurality of data blocks, where data blocks received by each second computing device are consecutive data blocks.

The consecutive data blocks are consecutive data. Compared with discrete data, the consecutive data can be sent without further data copying and integration, so that time required for data sending is shortened.

In the foregoing method, the first computing device sends each to-be-sent data block to a corresponding second computing device based on the send index list. During sending, data block copying does not need to be performed first, and the second computing device can receive consecutive data blocks, so that time required for data sending is shortened.

Optionally, the N second computing devices include the first computing device. During data sending, the first computing device also sends data to the first computing device, so that utilization of a device and integrity of computation are ensured.

Optionally, a number is set for each second computing device, and that the first computing device separately sends the plurality of data blocks to the N second computing devices based on the send index list includes: The first computing device determines, based on the send index list and the numbers of the second computing devices, a sequence of sending the plurality of data blocks to the N second computing devices, where the first computing device first sends a data block to the first computing device. During data sending, each first computing device first sends data to the first computing device, and then sends data to a next computing device starting from the first computing device, so that a data transmission conflict is avoided.

Optionally, the send index list includes a plurality of rows, each row indicates first storage locations, on the first computing device, of X data blocks to be sent to one second computing device, and X is a positive integer greater than or equal to 1.

That the first computing device separately sends the plurality of data blocks to the N second computing devices based on the send index list includes: For any one of the second computing devices, the first computing device obtains the first storage locations of the X to-be-sent data blocks from a row corresponding to the second computing device in the send index list; and obtains the X data blocks from the first storage locations on the first computing device, and sends the X data blocks to the second computing device. In some embodiments, in the send index list, a row may indicate the information about the second computing device. For example, a 1^{st} row indicates a first storage location of a data block to be sent to a second computing device whose number is 1, a 2^{nd} row indicates a first storage location of a data block to be sent to a second computing device whose number is 2, and so on. In some other embodiments, a column in the send index list may be used to store a number of a computing device, so that a corresponding row indicates a first storage location of a data block to be sent to the second computing device. For example, a 1^{st} column of a 1^{st} row stores a number 1, the 1^{st} row indicates a first storage location of a data block to be sent to a second computing device whose number is 1, a 2^{nd} row indicates a first storage location of a data block to be sent to a second computing device whose number is 2, and so on.

Optionally, the method further includes: The second computing device obtains a receive index list of the second computing device, where the receive index list indicates information about a first computing device corresponding to Y data blocks received by the second computing device, and Y is a positive integer greater than or equal to 1; and that the N second computing devices separately receive the plurality of data blocks includes: The second computing devices separately store, based on the receive index list, the data blocks sent by the first computing device.

In the foregoing method, the second computing device may consecutively receive data blocks from a same first computing device based on the receive index list, so that the second computing device can receive consecutive data blocks. In this way, the first computing device does not need to perform an operation such as data copying during sending, so that time consumed for data sending is reduced.

Optionally, the receive index list includes second storage locations of the Y data blocks on the second computing device and the information about the first computing device corresponding to the Y data blocks received by the second computing device, and that the second computing devices separately store, based on the receive index list, the data blocks sent by the first computing device includes: The second computing devices receive the data blocks from the first computing device; the second computing devices obtain, from a row corresponding to the first computing device in the receive index list based on the first computing device, second storage locations used for storing the data blocks; and the second computing devices store the data blocks at the second storage locations.

Optionally, the receive index list can further indicate an amount of to-be-received data. For different second computing devices, different amounts of data can be sent, and the second computing device allocates memory space of an appropriate size for received data based on the amount of data, so that a waste of the memory space is avoided.

According to a second aspect, a computing system is provided. The computing system includes a plurality of computing devices, and the computing device is configured to perform the method provided in any one of the first aspect or the optional implementations of the first aspect.

According to a third aspect, a computer-readable storage medium is provided. The storage medium stores at least one instruction, and the instruction is read by a processor, to enable a computing device to perform the method provided in any one of the first aspect or the optional implementations of the first aspect.

According to a fourth aspect, a computer program product is provided. The computer program product includes computer instructions. The computer instructions are stored in a computer-readable storage medium. A processor of a computing device reads the computer instructions from the computer-readable storage medium, and the processor executes the computer instructions, to enable the computing device to perform the method provided in any one of the first aspect or the optional implementations of the first aspect.

### BRIEF DESCRIPTION OF DRAWINGS

FIG. 1 is a schematic flowchart of all-reduce collective communication according to an embodiment of this application;
FIG. 2 is a schematic flowchart of all-to-all collective communication according to an embodiment of this application;
FIG. 3 is a diagram of a system architecture of a computing system according to an embodiment of this application;
FIG. 4 is a diagram of a structure of a computing device according to an embodiment of this application;
FIG. 5 is a diagram of an application scenario according to an embodiment of this application;
FIG. 6 is a flowchart of a method for constructing a send index list according to an embodiment of this application;
FIG. 7 is a diagram of a process of constructing a send index list according to an embodiment of this application;
FIG. 8 is a flowchart of a method for constructing a receive index list according to an embodiment of this application;
FIG. 9 is a diagram of a process of constructing a send index list according to an embodiment of this application;
FIG. 10 is a flowchart of a data transmission method in collective communication according to an embodiment of this application;
FIG. 11 is a block diagram of a structure of a data transmission apparatus in collective communication according to an embodiment of this application; and
FIG. 12 is a block diagram of a structure of a data transmission apparatus in collective communication according to an embodiment of this application.

### DESCRIPTION OF EMBODIMENTS

To make the objectives, technical solutions, and advantages of this application clearer, the following further describes implementations of this application in detail with reference to the accompanying drawings.

Embodiments of this application relate to a collective communication (collective communication) technology of a computing system. For ease of understanding, the following describes related concepts in the collective communication technology.

Collective communication: The collective communication is an operation of global data migration and global control between a group of processors in a multi-computer system. Common collective communication modes include broadcast (broadcast), barrier (barrier), reduce (reduce), scatter (scatter), gather (gather), all-gather (all-gather), all-scatter (all-scatter), all-reduce (all-reduce), all-to-all (all-to-all), and the like. Based on a data flow direction of collective communication, collective communication modes may be classified into a rooted collective communication (rooted communication) mode and a non-rooted collective communication (non-rooted communication) mode. The rooted collective communication mode is a collective communication mode in which a message is from or injected into a specific node. This type of collective communication mode mainly includes broadcast, gather, scatter, and reduce. The non-rooted collective communication mode is a collective communication mode in which a message is not from or injected into a specific node. This type of collective communication mode mainly includes all-gather, all-scatter, all-reduce, all-to-all, barrier, and the like.

The following separately describes the foregoing collective communication modes.

Broadcast: "Broadcast" means that data is transmitted on one node of a plurality of nodes participating in communication to each of other nodes in the plurality of nodes. For example, a node A includes data a, and nodes participating in communication include the node A, a node B, and a node C. After the node A broadcasts the data a, the node A, the node B, and the node C all obtain the data a.

Barrier: "Barrier" means that a process run on a node may include a plurality of threads, and the plurality of threads need to cooperate with each other to complete a task. This requires that coordination can be performed between the threads. A barrier is equivalent to a rendezvous point in a program. When a thread needs to wait for another thread, the thread may be run to the barrier. Once all the threads reach the barrier, the barrier is canceled, so that synchronization between the threads is completed.

Reduce: "Reduce" means that data on a plurality of nodes is reduced, and a reduced result is stored on a root node in the plurality of nodes. For example, a node A is a root node of a node B and a node C. The node A includes data a, the node B includes data b, and the node C includes data c. After the data a, the data b, and the data c are reduced, a result is data a+data b+data c, and the node A stores data a+data b+data c.

Scatter: "Scatter" means that data on a node is split, and another node participating in communication stores a data block obtained through splitting. For example, after a node A splits data on the node A, three data blocks are obtained. The three data blocks are respectively a data block a1, a data block a2, and a data block a3. The node A sends the data block a1 to the node A, the node A sends the data block a2 to the node B, and the node A sends the data block a3 to the node C, so that the data block a1 is stored on the node A, the data block a2 is stored on the node B, and the data block a3 is stored on the node C.

Gather: "Gather" means that data on a plurality of nodes participating in communication is aggregated to a root node in the plurality of nodes, to synchronize local data of the node to a specified node (the root node). For example, a node A is a root node of a node B and a node C, the node A includes data a, the node B includes data b, and the node C includes data c. After the node A performs a gather operation, the node A obtains the data a, the data b, and the data c.

All-gather: "All-gather" means that data on a plurality of nodes participating in communication is aggregated to each of the plurality of nodes, to synchronize local data of the node to each of the plurality of nodes. For example, a node A includes data a, a node B includes data b, and a node C includes data c. After the node A, the node B, and the node C perform an all-gather operation, the node A, the node B, and the node C all obtain the data a, the data b, and the data c.

All-scatter: "All-scatter" means that data on each of a plurality of nodes is split, and another node participating in communication stores a data block obtained through splitting. For example, after a node A splits data on the node A, a data block a1, a data block a2, and a data block a3 are obtained. After a node B splits data on the node B, a data block b1, a data block b2, and a data block b3 are obtained. After a node C splits data on the node C, a data block c1, a data block c2, and a data block c3 are obtained. The node A sends the data block a1 to the node A, sends the data block a2 to the node B, and sends the data block a3 to the node C. The node B sends the data block b1 to the node A, sends the data block b2 to the node B, and sends the data block b3 to the node C. The node C sends the data block c1 to the node A, sends the data block c2 to the node B, and sends the data block c3 to the node C. The data blocks a1, b1, and c1 are stored on the node A, the data blocks a2, b2, and c2 are stored on the node B, and the data blocks a3, b3, and c3 are stored on the node C.

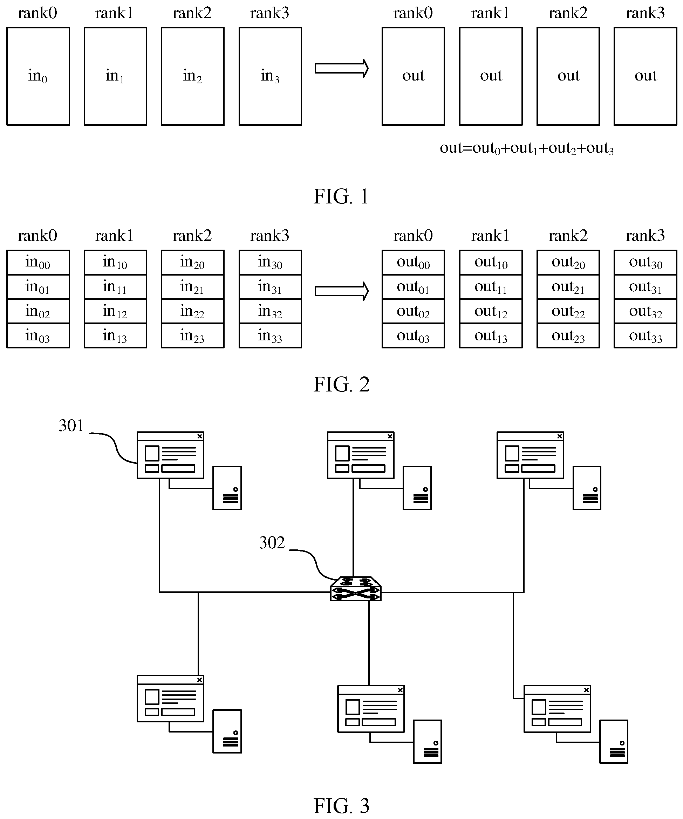

All-reduce: "All-reduce" means that data on a plurality of nodes is reduced, and each of the plurality of nodes stores a reduced result. FIG. 1 is a schematic flowchart of all-reduce collective communication according to an embodiment of this application. In FIG. 1, an example in which one process is run on one node, and one process corresponds to one number (rank) is used to describe an all-reduce implementation by summating data on different nodes. Rank0 includes data in₀, rank1 includes a data block in₁, rank2 includes a data block in₂, and rank3 includes a data block in₃. After the data blocks in₀, in₁, in₂, and in₃ are reduced, a result is out, rank0, rank1, rank2, and rank3 all obtain the reduced result out, and out is equal to out₀+out₁+out₂+out₃.

All-to-all: Each node exchanges data with another node. FIG. 2 is a schematic flowchart of all-to-all collective communication according to an embodiment of this application. An example in which one process is run on one computing node, and one process corresponds to one number is used to provide the schematic flowchart of the all-to-all collective communication. As shown in FIG. 2, rank0 is used as an example. Rank0 first stores a to-be-sent data block in rank0 to a send buffer. A data block sent from rank0 to rank0 is denoted as in₀₀, a data block sent from rank0 to rank1 is denoted as in₀₁, in₀₀ includes all data blocks that need to be sent by rank0 to rank0, and in₀₁ includes all data blocks that need to be sent by rank0 to rank1, and so on. After receiving in₀₀, rank0 stores in₀₀ in a 0^{th} block in a receive buffer of rank0, and records in₀₀ as out₀₀. After receiving in₀₁, rank1 stores in₀₁ in a 0^{th} block in a receive buffer of rank1, and records in₀₁ as out₁₀. A process in which another rank sends a data block is similar to this. To prevent a plurality of ranks from sending data blocks to a same rank at the same time, each rank needs to send data blocks in sequence. For example, rank0 first sends data blocks to rank0, and then sends data blocks to rank1, rank2, and rank3. Rank2 first sends data blocks to rank2, and then sends data blocks to rank3, rank0, and rank1. A sequence of sending data blocks by another rank is similar to this.

The following describes a system architecture of a computing system provided in an embodiment of this application.

An embodiment of this application provides a diagram of a system architecture of a computing system. FIG. 3 is a diagram of a system architecture of a computing system according to an embodiment of this application. The computing system includes a plurality of computing devices 301 and a plurality of network devices 302. The plurality of computing devices 301 include a first computing device and a second computing device. The first computing device is configured to send a data block. The second computing device is configured to receive and store the data block sent by the first computing device. The second computing device includes the first computing device. The network device 302 is configured to forward data blocks transmitted between computing devices. The network device may be a switch or a router. Based on the foregoing collective communication modes, the first computing device and the second computing device may exchange data in the foregoing collective communication modes. For example, a distributed computing process includes a plurality of iterations. In each iteration, the first computing device and the second computing device need to exchange data in an all-to-all collective communication mode, to obtain a data block required for performing this iteration.

The computing device 301 and the network device 302 are communicatively connected through a wired network or a wireless network. In some embodiments, the wireless network or the wired network uses a standard communication technology and/or protocol. A network is usually an internet, but may alternatively be any network, including but not limited to any combination of a local area network (local area network, LAN), a metropolitan area network (metropolitan area network, MAN), a wide area network (wide area network, WAN), a mobile network, a wired network, a wireless network, a private network, or a virtual private network. In some embodiments, peer-to-peer (peer-to-peer, P2P) communication is implemented between the computing device 301 and the network device 302 based on a remote procedure protocol (remote procedure call protocol, RPC). In some embodiments, technologies and/or formats including a hypertext markup language (hypertext markup language, HTML), an extensible markup language (extensible markup language, XML), and the like are used between the computing device 301 and the network device 302 to represent data blocks exchanged through a network. In addition, all or some links can be encrypted by using conventional encryption technologies such as a secure socket layer (secure socket layer, SSL), transport layer security (transport layer security, TLS), a virtual private network (virtual private network, VPN), and internet protocol security (internet protocol security, IPsec). In some other embodiments, customized and/or dedicated data communication technologies can be further used to replace or supplement the foregoing data communication technologies.

The following describes a structure of the computing device 301.

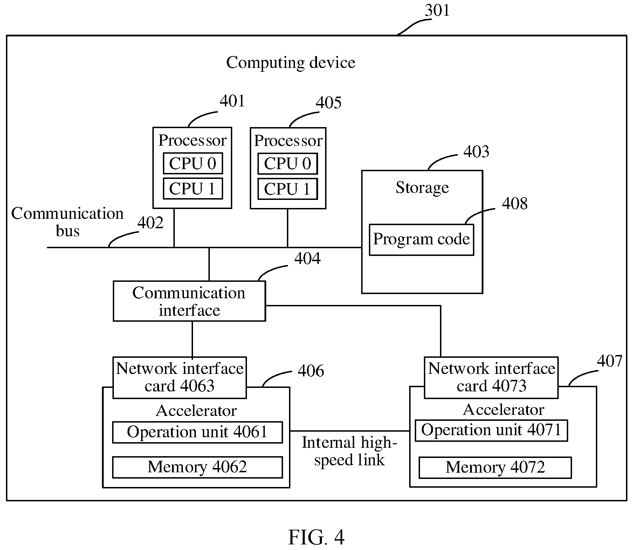

FIG. 4 is a diagram of a structure of a computing device according to an embodiment of this application. The computing device 301 may be a host, a server, a personal computer, or the like. The computing device 301 may be implemented by using a general bus architecture.

The computing device 301 includes at least one processor 401, a communication bus 402, a storage 403, and at least one communication interface 404.

The processor 401 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 301 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field programmable logic gate array (field programmable gate array, FPGA), generic array logic (generic array logic, GAL), or any combination thereof.

The communication bus 402 is configured to transfer information between the foregoing components. The communication bus 402 may be classified into an address bus, a data bus, a control bus, and the like. For ease of representation, only one line is used to represent the bus in FIG. 4, but this does not mean that there is only one bus or only one type of bus.

The storage 403 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only memory, EEPROM), a compact disc read-only memory (compact disc read-only memory, CD-ROM) or another optical disk storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. For example, the storage 403 exists independently and is connected to the processor 401 through the communication bus 402. Alternatively, the storage 403 may be integrated with the processor 401.

The communication interface 404 is any apparatus such as a transceiver, and is configured to communicate with another device or a communication network. The communication interface 404 includes a wired communication interface, and may further include a wireless communication interface. The wired communication interface may be, for example, an ethernet interface. The ethernet interface may be an optical interface, an electrical interface, or a combination thereof. The wireless communication interface may be a wireless local area network (wireless local area network, WLAN) interface, a cellular network communication interface, a combination thereof, or the like.

In an embodiment, the processor 401 may include one or more CPUs, for example, a CPU 0 and a CPU 1 shown in FIG. 4.

In an embodiment, the computing device 301 may include a plurality of processors, for example, a processor 401 and a processor 405 shown in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

**In** an embodiment, the computing device 301 may include a plurality of accelerators, configured to execute a computing task, for example, an accelerator 406 and an accelerator 407 shown in FIG. 4. An accelerator includes an operation unit and a memory, and further includes a matching network interface card, used for communication between accelerators of different computing devices. As shown in FIG. 4, the accelerator 406 includes an operation unit 4061, a memory 4062, and a network interface card 4063, and the accelerator 407 includes an operation unit 4071, a memory 4072, and a network interface card 4073. The accelerator 406 communicates with the accelerator 407 through an internal high-speed link, and the accelerator 406 is connected to the processor 401 through peripheral component interconnect express (peripheral component interconnect express, PCIE).

In an embodiment, the computing device 301 may further include an output device and an input device. The output device communicates with the processor 401, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 401, and may receive a user input in a plurality of manners. For example, the input device may be a mouse, a keyboard, a touchscreen device, or a sensor device.

In some embodiments, the storage 403 is configured to store program code 408 for executing the solutions in this application, and the processor 401 may execute the program code 408 stored in the storage 403. In other words, the computing device 301 may implement, by using the processor 401 and the program code 408 in the storage 403, a data transmission method in collective communication provided in a method embodiment.

The computing device may be configured to compute a model parameter in distributed training of a large model. In some embodiments, the computing device may be configured to train a recommendation model including an embedding (embedding) layer and train a large model including a mixture of experts (mixture of experts, MoE) layer.

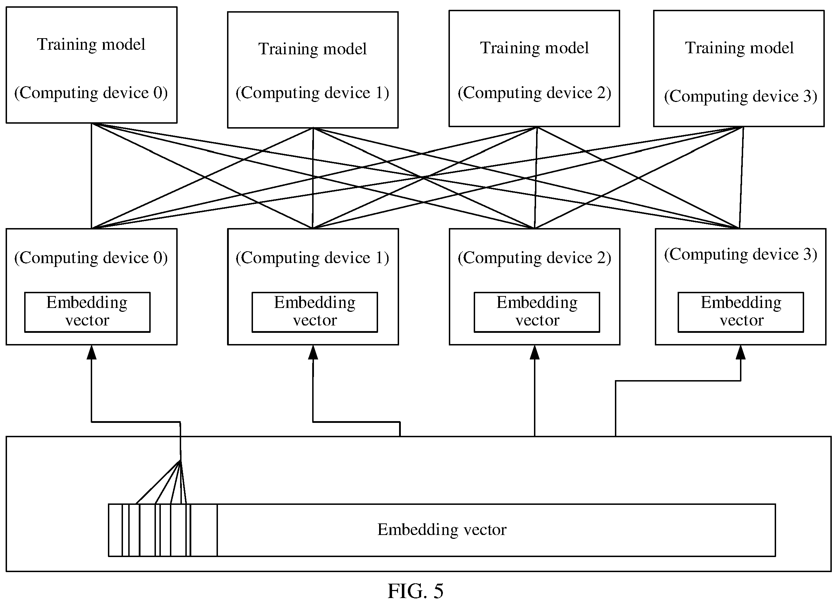

In a scenario in which the recommendation model including the embedding layer is trained, an input sample is usually a sparse matrix including a large quantity of zero elements. The embedding layer is configured to preprocess the input sample, map discrete data blocks into consecutive data blocks, to perform dimension reduction on the sample while retaining a feature of the sample, and perform model training based on an embedding vector obtained through dimension reduction. A model training process includes a plurality of iterations. FIG. 5 is a diagram of an application scenario according to an embodiment of this application. Each computing device stores some embedding vectors. Before each iteration, computing devices need to communicate with each other in an all-to-all collective communication mode, to obtain embedding vectors required for this iteration.

In a scenario in which the large model including the MoE layer is trained, the model is deployed on different computing devices. Each computing device stores a part of a weight (token) required for computation. The weight is a group of floating point numbers, is used as a main parameter of a neural network, participates in computation during model training, and is updated in a backpropagation phase. According to different input samples, each computing device needs to use a different weight to perform computation. Before each iteration, computing devices also need to communicate with each other in the all-to-all collective communication mode, to obtain weights required for this iteration.

In the foregoing two application scenarios, a data block required by each computing device during each iteration is determined by a gated model. After each iteration is completed, the gated model detects a data block on the computing device, determines a computing device that is responsible for computing the data block on the computing device in a next iteration, and determines data blocks that need to be used by the computing device in the next iteration.

In the foregoing two application scenarios, data blocks to be sent to a same second computing device may be arranged non-consecutively in a send buffer, and a first computing device needs to copy the data blocks to combine the to-be-sent data blocks, and then perform data transmission. A data copying process is time-consuming, and becomes a time-consuming bottleneck of distributed computing. Therefore, for a problem existing in all-to-all collective communication in the foregoing application scenario, this application provides a data transmission method in collective communication, to construct an index scatter gather list (index scatter gather list, iSGL) for each computing device. The index scatter gather list includes a send index list (send_isgl) and a receive index list (recv_isgl). The first computing device sends a data block to a second computing device based on the send index list, and the second computing device receives and stores the data block based on the receive index list. In this data transmission process, data block copying is not required, which saves time for transmitting non-consecutive data blocks in different processes, thereby resolving a problem of high time consumption in a communication phase, and breaking through a performance bottleneck of distributed computing. Performance of all-to-all collective communication can be improved by 50%, and performance of end-to-end communication can be improved by more than 13%.

The following separately describes a process of constructing the send index list, a process of constructing the receive index list, and a process of performing data transmission based on an index list in embodiments of this application.

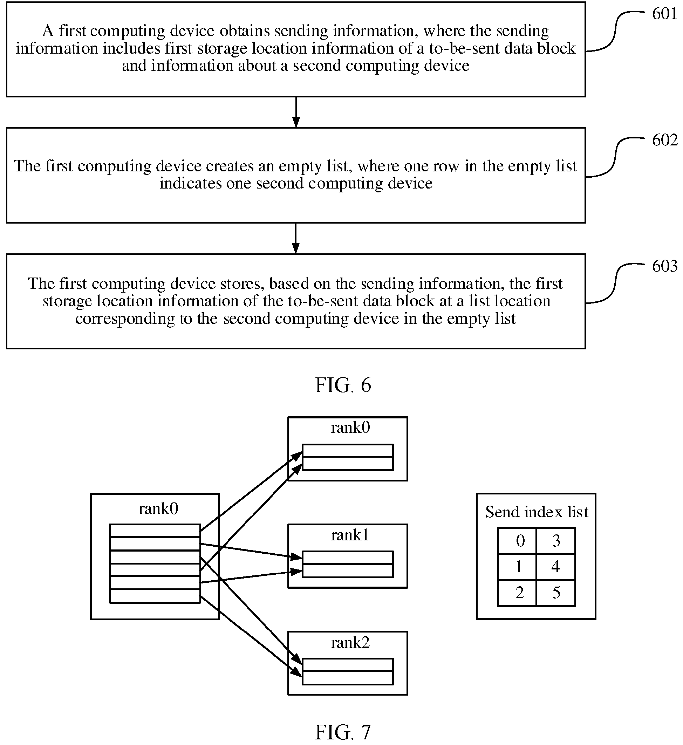

The process of constructing the send index list in embodiments of this application is described first. FIG. 6 is a flowchart of a method for constructing a send index list according to an embodiment of this application. As shown in FIG. 6, an example in which the method is performed by a first computing device in the plurality of computing devices is used, and the method includes the following step 601 to step 603.

601: The first computing device obtains sending information, where the sending information includes first storage location information of a to-be-sent data block and information about a second computing device.

The first storage location information indicates a storage location of the to-be-sent data block in a send buffer of the first computing device. The information about the second computing device indicates a second computing device to which the to-be-sent data block is sent.

The sending information is determined by a gated model. A model training process includes a plurality of iterations. Before each iteration, the first computing device inputs a data block to the gated model, and the gated model determines, based on the input data block, information about a second computing device corresponding to the input data block and first storage location information on the first computing device. In a scenario in which a recommendation model including an embedding layer is trained, the data block input to the gated model includes an embedding vector stored on the first computing device. In a scenario in which a large model including an MoE layer is trained, the data block input to the gated model includes a weight stored on the first computing device.

In some embodiments, the first storage location information is an offset value of the to-be-sent data block in the send buffer of the first computing device. In some other embodiments, the first storage location information is a start address of the to-be-sent data block in the send buffer of the first computing device. This is not limited in embodiments of this application.

602: The first computing device creates an empty list, where one row in the empty list indicates one second computing device.

A total length of the empty list is equal to a total quantity of data blocks to be sent by the first computing device. For example, if there are n to-be-sent data blocks, the total length of the empty list is n, and the empty list is used for carrying first storage location information of the n to-be-sent data blocks. The first storage location information indicates a corresponding first storage location, and n is a positive integer. A quantity of rows in the empty list is equal to a quantity of second computing devices corresponding to the data blocks to be sent by the first computing device, and a column in the empty list indicates a maximum quantity of data blocks that can be sent by the first computing device to a corresponding second computing device. For example, a location Lᵢⱼ in the empty list is used for storing first storage location information of a j^{th} data block that is to be sent to a second computing device i and that is in the send buffer of the first computing device.

In the foregoing embodiment, a row in the empty list indicates a second computing device to which a data block is to be sent. In some embodiments, a column in the empty list indicates the second computing device. The column stores identification information of each second computing device. The identification information is a number of the second computing device, or an identity (identity, ID) of the second computing device, or an internet protocol address (internet protocol address, ip) corresponding to the second computing device. This is not limited in embodiments of this application.

603: The first computing device stores, based on the sending information, the first storage location information of the to-be-sent data block at a list location corresponding to the second computing device in the empty list.

A process in which the first computing device stores the first storage location information of the to-be-sent data block at the list location corresponding to the second computing device in the empty list includes: starting from a 1^{st} data block to be sent by the first computing device, finding a corresponding row in the empty list based on identification information of a second computing device of the data block; storing first storage location information corresponding to the data block in the corresponding row; and repeating the foregoing steps for remaining to-be-sent data blocks until first storage location information of all the to-be-sent data blocks is stored at corresponding list locations in the empty list.

The following uses a computing system including three computing devices as an example to describe the foregoing steps 601 to 603. FIG. 7 is a diagram of a process of constructing a send index list according to an embodiment of this application. One process is run on one computing device, numbers corresponding to three processes are respectively rank0, rank1, and rank2, and each rank includes six to-be-sent data blocks. With reference to a left diagram in FIG. 7, an example in which rank0 is a first computing device, rank0, rank1, and rank2 are second computing devices, and first storage location information is an offset value is used for description. The first computing device first creates an empty list of three rows and two columns, and then traverses data blocks in a send buffer starting from a data block whose offset value is 0 in the send buffer. A traversal process is as follows: A second computing device that is used as a sending destination of a data block whose offset value is 0 in a send buffer of rank0 is rank0, and corresponds to a 0^{th} row in the send index list. The first computing device first finds the 0^{th} row, and then stores the offset value 0 in a 0^{th} column of the 0^{th} row in the send index list. A second computing device that is used as a sending destination of a data block whose offset value is 1 is rank1. The first computing device first finds a 1^{st} row, and then stores the offset value 1 in a 0^{th} column of the 1^{st} row in the send index list. The foregoing process is repeated for another data block in rank0 until the traversal is completed. In the foregoing example, the process of constructing the send index list is described by using rank0 as an example. A process of constructing the send index list for another rank is similar to this.

In the foregoing example, a quantity of data blocks corresponding to each second computing device may be the same or may be different. In other words, lengths of rows in the send index list may be different. In embodiments of this application, the quantity of data blocks corresponding to each second computing device is not limited, and a quantity of data blocks sent by each first computing device to the second computing device is not limited.

In the foregoing steps 601 to 603, the send index list is constructed based on a newly created empty list. In some embodiments, the send index list may be constructed based on an existing list. The list may be constructed by the first computing device for a previous iteration. When a current send index list is constructed, values in the list may be first cleared to obtain an empty list, or values that need to be stored in the current send index list may be directly used to overwrite content of the list. A list is constructed by using the foregoing method, and a new empty list does not need to be created each time, so that storage space of the first computing device can be saved.

According to the technical solution in the foregoing embodiment, the send index list indicates a first storage location of a to-be-sent data block, and the first computing device obtains the to-be-sent data block from the first storage location based on the send index list, and sends the to-be-sent data block to a corresponding second computing device. During sending, data block copying does not need to be performed first, and the second computing device can receive consecutive data blocks, so that time required for data sending is shortened.

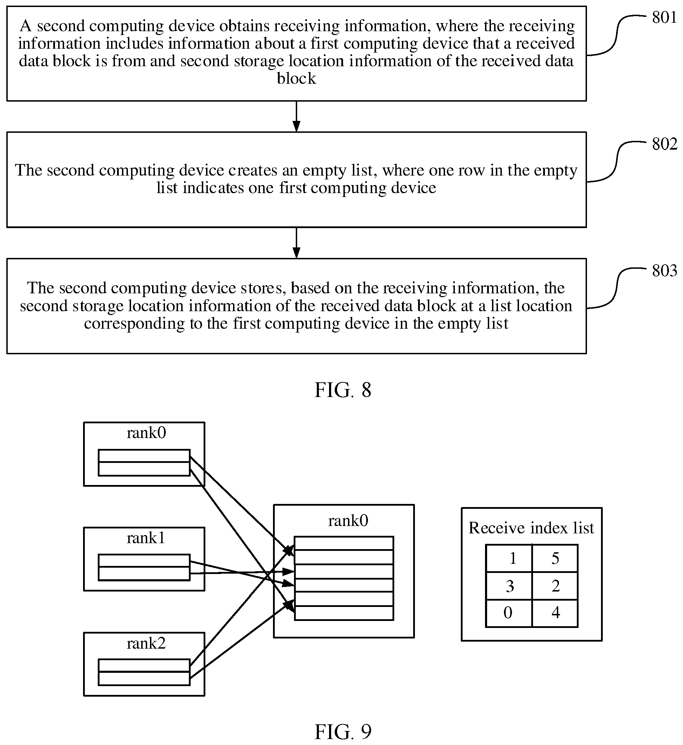

The following describes the process of constructing the receive index list in embodiments of this application. FIG. 8 is a flowchart of a method for constructing a receive index list according to an embodiment of this application. As shown in FIG. 8, the method is performed by a second computing device in the plurality of computing devices, and the method includes the following step 801 to step 803.

801: The second computing device obtains receiving information, where the receiving information includes information about a first computing device that a received data block is from and second storage location information of the received data block.

The information about the first computing device indicates a first computing device that sends the data block received by the second computing device to the second computing device. The second storage location information indicates a storage location at which the received data block is to be stored in a receive buffer of the second computing device.

The receiving information is determined by a gated model. A model training process includes a plurality of iterations. Before each iteration, the second computing device inputs a data block to the gated model, and the gated model determines, based on the input data block, information about a first computing device corresponding to the input data block and second storage location information on the second computing device. In a scenario in which a recommendation model including an embedding layer is trained and a scenario in which a large model including an MoE layer is trained, the data block input to the gated model is a training sample input to the second computing device.

In some embodiments, the second storage location information is an offset value of the received data block in the receive buffer. In some other embodiments, the second storage location information is a start address of the received data block in the receive buffer. This is not limited in embodiments of this application.

802: The second computing device creates an empty list, where one row in the empty list indicates one first computing device.

A total length of the empty list is equal to a total quantity of data blocks to be received by the second computing device. For example, if there are n to-be-received data blocks, the total length of the empty list is n, the empty list is used for carrying second storage location information of the n data blocks, and n is a positive integer. A quantity of rows in the empty list is equal to a quantity of first computing devices corresponding to the data blocks to be received by the second computing device, and a column in the empty list indicates a maximum quantity of data blocks from a corresponding first computing device that can be received by the second computing device. For example, a location Lᵢⱼ in the empty list is used for storing second storage location information of a j^{th} data block from a first computing device i in the receive buffer.

In the foregoing embodiment, a row in the empty list indicates a first computing device that a received data block is from. In some embodiments, a column in the empty list indicates the first computing device. The column stores identification information of each first computing device. The identification information is a number of the first computing device, an ID of the first computing device, or an ip address corresponding to the first computing device. This is not limited in embodiments of this application.

In the foregoing embodiment, the receive index list can further indicate an amount of to-be-received data. For different second computing devices, different amounts of data can be sent, and the second computing device allocates memory space of an appropriate size for received data based on the amount of data, so that a waste of the memory space is avoided.

803: The second computing device stores, based on the receiving information, the second storage location information of the received data block at a list location corresponding to the first computing device in the empty list.

A process in which the second computing device stores the second storage location information of the received data block at the list location corresponding to the first computing device in the empty list includes: starting from a 1^{st} data block to be received by the second computing device, finding a corresponding row in the empty list based on identification information of a first computing device corresponding to the data block; storing second storage location information corresponding to the data block in the corresponding row; and repeating the foregoing steps for remaining to-be-received data blocks until second storage location information of all the to-be-received data blocks is stored at corresponding list locations in the empty list.

FIG. 9 is a diagram of a process of constructing a send index list according to an embodiment of this application. A computing system including three computing devices is used as an example to describe the foregoing steps 801 to 803. One process is run on one computing device, and numbers corresponding to three processes are respectively rank0, rank1, and rank2. Each rank includes six to-be-received data blocks, and every two data blocks correspond to a same first computing device. With reference to a left diagram in FIG. 9, an example in which rank0 is a second computing device, rank0, rank1, and rank2 are first computing devices, and second storage location information is an offset value is used for description. The second computing device first creates an empty list of three rows and two columns, and then traverses to-be-received data blocks starting from a 1^{st} to-be-received data block. A traversal process is as follows: A first computing device that a 0^{th} to-be-received data block in rank0 is from is rank1, and corresponds to a 1^{st} row in the receive index list. The second computing device first finds the 1^{st} row, and then stores an offset value 0 in a 0^{th} column of the 1^{st} row in the send index list. A first computing device that a 1^{st} to-be-received data block in rank0 is from is rank0, and corresponds to a 0^{th} row in the receive index list. The second computing device first finds the 0^{th} row, and then stores an offset value 1 in a 0^{th} column of the 1^{st} row in the send index list. The foregoing process is repeated for another to-be-received data block in rank0 until the traversal is completed. In the foregoing example, the process of constructing the receive index list is described by using rank0 as an example. A process of constructing the receive index list for another rank is similar to this.

In the foregoing example, a quantity of data blocks corresponding to each first computing device may be the same or may be different. In other words, lengths of rows in the receive index list may be different. A quantity of data blocks corresponding to each first computing device is not limited in embodiments of this application.

In the foregoing steps 801 to 803, the receive index list is constructed based on a newly created empty list. In some embodiments, the receive index list may be constructed based on an existing list. The list may be constructed by the second computing device for a previous iteration. When a current receive index list is constructed, values in the list may be first cleared to obtain an empty list, or values that need to be stored in the current receive index list may be directly used to overwrite content of the list. A list is constructed by using the foregoing method, and a new empty list does not need to be created each time, so that storage space of the second computing device can be saved.

**In** the foregoing steps 801 to 803, the second computing device is used as an example to describe the process of constructing the receive index list. **In** some embodiments, the gated model may send the receiving information of the second computing device to the first computing device, and the first computing device constructs the receive index list for the second computing device based on the receiving information of the second computing device. After the receive index list is constructed, the first computing device sends the receive index list to a corresponding second computing device. A process of constructing the receive index list is similar to the foregoing steps 801 to 803, and details are not described herein again.

**In** the foregoing steps 601 to 603 and steps 801 to 803, an example in which one computing device runs one process and one process corresponds to one number is used to separately describe a process in which the first computing device constructs the send index list and a process in which the second computing device constructs the receive index list. **In** some embodiments, one computing device may run a plurality of processes, and each process corresponds to a number, that is, a rank. For different ranks in a same computing device, a processing unit of the computing device may directly store, by using a scatter gather list (scatter gather list, SGL) function in a remote direct memory access (remote direct memory access, RADM) technology and in a shared memory manner, a data block in a receive buffer corresponding to a destination rank, without constructing a receive index list.

**In** some embodiments, different ranks of the first computing device and the second computing device communicate with each other by using a network interface card. **In** some other embodiments, different ranks of the first computing device and the second computing device communicate with each other by using space multiplexing access (space division multiple access, SDMA) or another data transmission engine. This is not limited in embodiments of this application.

**In** the foregoing steps 601 to 603 and steps 801 to 803, a list is used as an example to describe the process of constructing the send index list and the process of constructing the receive index list. **In** some embodiments, a linked list may be used as a form of the send index list and the receive index list. The following uses the first computing device as an example to describe a process of constructing the send index list in a form of the linked list: The first computing device obtains sending information of a to-be-sent data block, where the sending information includes first storage location information of the to-be-sent data block and information about a second computing device; the first computing device creates an empty linked list, where a length of the empty linked list is equal to a quantity of data blocks to be sent by the first computing device; and the first computing device stores the first storage location information of the to-be-sent data block in a send buffer in a pointer field of the empty linked list based on a sending sequence. For example, there are three to-be-sent data blocks on rank2. An example in which first storage location information is an offset value is used for description. Based on a sending sequence, rank2 needs to send a data block whose offset value is 0 to rank2, send a data block whose offset value is 2 to rank0, and send a data block whose offset value is 1 to rank1. Based on a sending requirement, the first computing device constructs a linked list with a length of 3 for rank2, stores, based on a start address of a send buffer, address information corresponding to the offset value 0 in a pointer field of a 1^{st} node of the linked list, stores address information corresponding to the offset value 2 in a pointer field of a 2^{nd} node of the linked list, and stores address information corresponding to the offset value 1 in a pointer field of a 3^{rd} node of the linked list. The same applies to another rank. A process in which the second computing device constructs the receive index list in the form of the linked list is similar, and details are not described herein again.

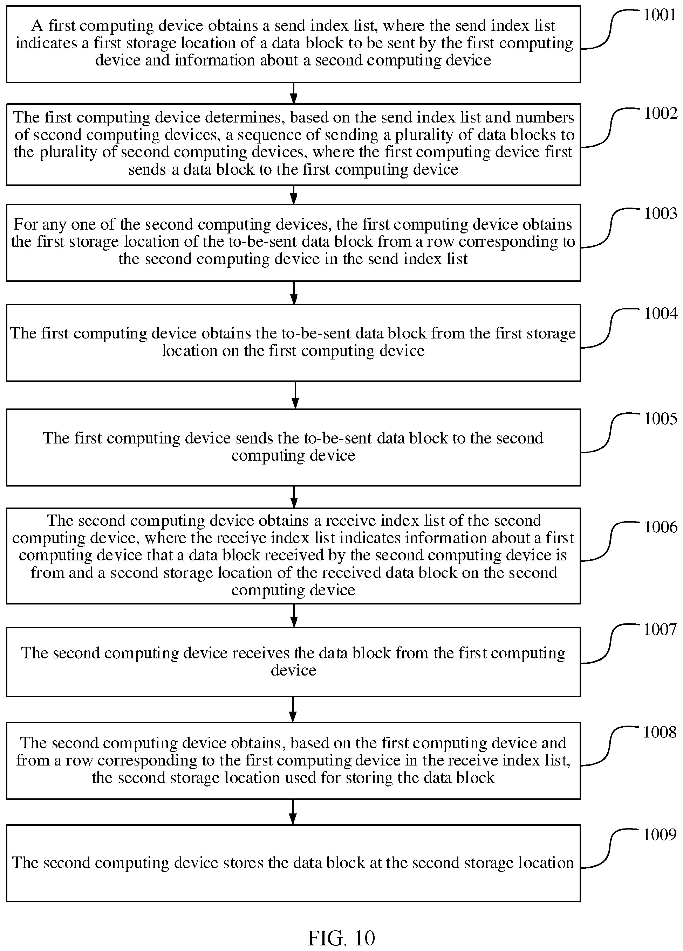

FIG. 10 is a flowchart of a data transmission method in collective communication according to an embodiment of this application. As shown in FIG. 10, interaction between a first computing device and a second computing device is used as an example, and the method includes the following step 1001 to step 1009.

1001: The first computing device obtains a send index list, where the send index list indicates a first storage location of a data block to be sent by the first computing device and information about the second computing device.

Before each iteration, the first computing device first obtains an address of the send index list, and the first computing device obtains the send index list based on the address of the send index list. In some embodiments, the first computing device includes an accelerator, and the accelerator is configured to generate the send index list. The accelerator includes a matching network interface card, and the network interface card includes a communication engine. Before each iteration, the accelerator invokes a communication operator to send an address of a send buffer and the address of the send index list to the communication engine on the network interface card. The communication engine queries for the address of the send buffer to obtain the to-be-sent data block, and queries for the address of the send index list to obtain the send index list. The send index list is constructed based on steps 601 to 603, and content of the send index list is not described herein again.

In the foregoing embodiment, the first computing device sends each to-be-sent data block to a corresponding second computing device based on the send index list. During sending, data block copying does not need to be performed first, and the second computing device can receive consecutive data blocks, so that time required for data sending is shortened.

1002: The first computing device determines, based on the send index list and the numbers of second computing devices, a sequence of sending a plurality of data blocks to the plurality of second computing devices, where the first computing device first sends a data block to the first computing device.

That the first computing device first sends a data block to the first computing device means: After each iteration, the first computing device is a 1^{st} second computing device corresponding to the data blocks to be sent by the first computing device. In other words, the first computing device first sends a data block to the first computing device, and then sends a data block to a next second computing device starting from the first computing device. Using rank2 as an example, rank2 first sends data to rank2, and then sends data blocks to rank3, rank0, and rank1 in sequence based on numbers. Based on the foregoing sequence, the first computing device may determine a rank to which a current to-be-sent data block needs to be sent, that is, may determine a second computing device to which the current data block is to be sent.

In the foregoing embodiment, during data sending, the first computing device also sends data to the first computing device, so that utilization of a device and integrity of computation are ensured. During data sending, each first computing device first sends data to the first computing device, and then sends data to a next computing device starting from the first computing device, so that a data transmission conflict is avoided.

1003: For any one of the second computing devices, the first computing device obtains the first storage location of the to-be-sent data block from a row corresponding to the second computing device in the send index list.

In some embodiments, in the send index list, a row may indicate the information about the second computing device. For example, a 1^{st} row indicates a first storage location of a data block to be sent to a second computing device whose number is 1, a 2^{nd} row indicates a first storage location of a data block to be sent to a second computing device whose number is 2, and so on. In some other embodiments, a column in the send index list may be used to store a number of a computing device, so that a corresponding row indicates a first storage location of a data block to be sent to the second computing device. For example, a 1^{st} column of a 1^{st} row stores a number 1, the 1^{st} row indicates a first storage location of a data block to be sent to a second computing device whose number is 1, a 2^{nd} row indicates a first storage location of a data block to be sent to a second computing device whose number is 2, and so on.

1004: The first computing device obtains the to-be-sent data block from the first storage location on the first computing device.

A process in which the first computing device obtains the to-be-sent data block from the first storage location on the first computing device includes: The first computing device finds the corresponding first storage location in the send buffer, and obtains the to-be-sent data block from the first storage location. In some embodiments, the first computing device includes an accelerator, and the accelerator is configured to generate the send index list. The accelerator includes a matching network interface card, and the network interface card includes a communication engine. The communication engine traverses the send index list starting from a row corresponding to a second computing device used as a current sending destination in the send index list. Each time the communication engine reads a value in the send index list, the communication engine obtains a to-be-sent data block from a corresponding location in the send buffer based on the value.

When the first storage location is indicated by an offset value, a process of obtaining the to-be-sent data block from the corresponding location in the send buffer includes: The communication engine finds a start address of the send buffer; the communication engine calculates a start address of the data block in the send buffer based on an offset value corresponding to the data block; and the communication engine reads, from the start address, data whose data amount is equal to a size of the data block, to obtain the data block. When the first storage location information is indicated by a start address, a process of obtaining the to-be-sent data block from the corresponding location in the send buffer includes: The communication engine finds a start address corresponding to the data block in the send buffer; and the communication engine reads, from the start address, a data block whose data amount is equal to a size of the data block, to obtain the data block.

1005: The first computing device sends the to-be-sent data block to the second computing device.

A process in which the first computing device sends the data block to the second computing device includes: Based on a data block sending sequence and the second computing device corresponding to the data block, the first computing device sends a data block to a corresponding second computing device each time the first computing device reads the data block from the send buffer.

1006: The second computing device obtains a receive index list of the second computing device, where the receive index list indicates information about a first computing device that a data block received by the second computing device is from and a second storage location of the received data block on the second computing device.

Before each iteration, the second computing device first obtains an address of the receive index list, and the second computing device obtains the receive index list based on the address of the receive index list. In some embodiments, the second computing device includes an accelerator, and the accelerator is configured to generate the receive index list. The accelerator includes a matching network interface card, and the network interface card includes a communication engine. Before each iteration, the accelerator invokes a communication operator to send an address of a receive buffer and the address of the receive index list to the communication engine on the network interface card. The communication engine queries for the address of the receive index list to obtain the receive index list. The receive index list is constructed based on steps 801 to 803, and content of the receive index list is not described herein again.

1007: The second computing device receives the data block from the first computing device.

A receiving process is not controlled by a receiving sequence. To be specific, when the communication engine of the network interface card on the second computing device identifies that a data block is sent from the first computing device to the second computing device, the second computing device receives the data block, and receives one data block each time.

1008: The second computing device obtains, from a row corresponding to the first computing device in the receive index list based on the first computing device, the second storage location used for storing the data block.

A process in which the second computing device obtains the second storage location used for storing the data block includes: The second computing device determines, based on the first computing device that the received data block is from, a row corresponding to a number of the first computing device, and determines, from the row, the second storage location corresponding to the received data block. In some embodiments, the foregoing process includes: The second computing device identifies the first computing device that the received data block is from; determines, based on the number of the first computing device, the row corresponding to the first computing device in the receive index list; the second computing device finds, based on a quantity of data blocks sent by the first computing device to the second computing device, a list location corresponding to the data block in the receive index list, where second storage location information of the data block is stored at the list location; and the second computing device determines the second storage location from the list location. For example, a j^{th} data block from a first computing device i corresponds to an i^{th} row and a j^{th} column in the receive index list. The second computing device reads a value stored at the list location, to obtain a second storage location of the data block.

In the foregoing embodiment, the second computing device may consecutively receive data blocks from a same first computing device based on the receive index list, so that the second computing device can receive consecutive data blocks. In this way, the first computing device does not need to perform an operation such as data copying during sending, so that time consumed for data sending is reduced.

In the foregoing embodiment, the row corresponding to the first computing device in the receive index list is determined based on the list location in the receive index list. In some embodiments, based on identification information of the first computing device stored in the receive index list, the second computing device queries the receive index list for a row storing the identification information, where the row is the row corresponding to the first computing device. The identification information may be the number of the first computing device, may be an ID of the first computing device, or may be an ip address corresponding to the first computing device. This is not limited in embodiments of this application.

1009: The second computing device stores the data block at the second storage location.

When the second storage location is indicated by an offset value, a process in which the second computing device stores the data block at the second storage location includes: The communication engine finds a start address of the receive buffer; the communication engine calculates a start address of the data block in the receive buffer based on an offset value corresponding to the data block; the communication engine calculates an offset of the data block in the receive buffer based on a data amount of the data block; and the communication engine stores, starting from the start address corresponding to the data block, the data block in a segment of storage space whose length is equal to the offset.

When the first storage location is indicated by a start address, the process in which the second computing device stores the data block at the second storage location includes: The communication engine finds a start address at which the data block is to be stored in the receive buffer; the communication engine calculates an offset of the data block in the receive buffer based on a data amount of the data block; and the communication engine stores, starting from the start address corresponding to the data block, the data block in a segment of storage space whose length is equal to the offset.

According to the technical solution in this embodiment of this application, the first computing device obtains the first storage location of the to-be-sent data block from the send index list, and sends the data block to the second computing device. The second computing device stores the received data block at the second storage location indicated by the receive index list. **In** this data transmission process, data block copying is not required, which saves time for transmitting non-consecutive data blocks in different processes, thereby resolving a problem of high time consumption in a communication phase, and breaking through a performance bottleneck of distributed computing.

The foregoing describes an example of the data transmission method in collective communication disclosed in this application. The following describes an example of a data transmission apparatus in collective communication disclosed in this application. Embodiments of this application provide examples of two data transmission apparatuses in collective communication. One data transmission apparatus in collective communication is used in a first computing device in a computing system, and the other data transmission apparatus in collective communication is used in a second computing device in the computing system. The following separately describes the two data transmission apparatuses in collective communication.

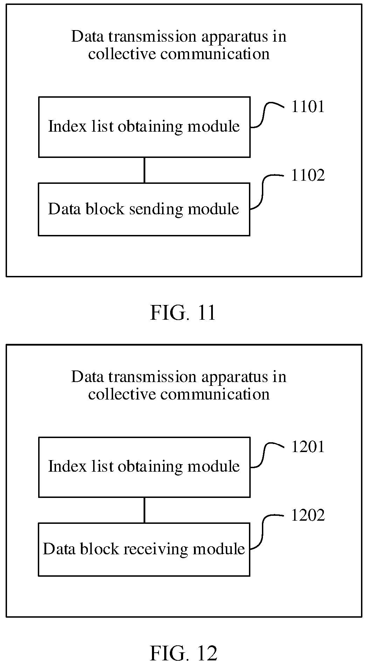

FIG. 11 is a block diagram of a structure of a data transmission apparatus in collective communication according to an embodiment of this application. As shown in FIG. 11, the apparatus is used in a first computing device, and the apparatus includes an index list obtaining module 1101 and a data block sending module 1102.

The index list obtaining module 1101 is configured to obtain a send index list of the first computing device, where the send index list indicates information about a second computing device corresponding to each of a plurality of data blocks to be sent by the first computing device, the information about the second computing device indicates a computing device that receives each data block, a quantity of second computing devices is N, and N is a positive integer greater than or equal to 2.

The data block sending module 1102 is configured to separately send the plurality of data blocks to the N second computing devices based on the send index list.

In a possible implementation, the N second computing devices include the first computing device.

In a possible implementation, a number is set for each second computing device, and the data block sending module 1102 is configured to determine, based on the send index list and the numbers of the second computing devices, a sequence of sending the plurality of data blocks to the N second computing devices, where the first computing device first sends a data block to the first computing device.

In a possible implementation, the send index list includes a plurality of rows, each row indicates first storage locations, on the first computing device, of X data blocks to be sent to one second computing device, and X is a positive integer greater than or equal to 1.

The data block sending module 1102 is configured to: for any one of the second computing devices, obtain the first storage locations of the X to-be-sent data blocks from a row corresponding to the second computing device in the send index list; obtain the X data blocks from the first storage locations on the first computing device; and send the X data blocks to the second computing device.

FIG. 12 is a block diagram of a structure of a data transmission apparatus in collective communication according to an embodiment of this application. As shown in FIG. 12, the apparatus is used in a second computing device, and the apparatus includes an index list obtaining module 1201 and a data block receiving module 1202.

The index list obtaining module 1201 is configured to obtain a receive index list of the second computing device, where the receive index list indicates information about a first computing device corresponding to Y data blocks received by the second computing device, and Y is a positive integer greater than or equal to 1.

The data block receiving module 1202 is configured to receive a plurality of data blocks, where data blocks received by each second computing device are consecutive data blocks.

**In** a possible implementation, the data block receiving module 1202 includes:
a data block storage unit, configured to separately store, based on the receive index list, the data blocks sent by the first computing device.

**In** a possible implementation, the receive index list includes a plurality of rows, and each row indicates second storage locations, on the second computing device, of the Y data blocks received from at least one first computing device.

The data block storage unit is configured to: receive a data block from the first computing device; obtain, from a row corresponding to the first computing device in the receive index list based on the first computing device, a second storage location used for storing the data block; and store the data block at the second storage location.

The index list obtaining module 1101, the data block sending module 1102, the index list obtaining module 1201, and the data block receiving module 1202 may all be implemented by using software or hardware. The following uses the index list obtaining module 1201 as an example to describe an implementation of the index list obtaining module 1201. Similarly, for an implementation of another module, refer to the implementation of the index list obtaining module 1201.

Using a module as an example of a software functional unit, the index list obtaining module 1201 may include code run on a computing instance. The computing instance may include at least one of a physical host (computing device), a virtual machine, and a container. Further, there may be one or more computing instances. For example, the index list obtaining module 1201 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region or cross-region communication between VPCs in different regions. An interconnection between VPCs is implemented through the communication gateway.

Using a module as an example of a hardware functional unit, the index list obtaining module 1201 may include at least one computing device such as a server. Alternatively, the index list obtaining module 1201 may be a device implemented by using an application-specific integrated circuit (application-specific integrated circuit, ASIC) or a programmable logic device (programmable logic device, PLD), or the like. The PLD may be a complex programmable logic device (complex programmable logic device, CPLD), a field programmable gate array (field programmable gate array, FPGA), generic array logic (generic array logic, GAL), or any combination thereof.

A plurality of computing devices included in the index list obtaining module 1201 may be distributed in a same region, or may be distributed in different regions. The plurality of computing devices included in the index list obtaining module 1201 may be distributed in a same AZ, or may be distributed in different AZs. Similarly, the plurality of computing devices included in the index list obtaining module 1201 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, steps that the foregoing modules are responsible for implementing may be specified as required, and all functions of the foregoing apparatus are implemented by separately implementing different steps in the data transmission method in collective communication by using the foregoing modules. In other words, when the data transmission apparatuses in collective communication provided in the foregoing embodiments implement data transmission, division into the foregoing functional modules is merely used as an example for description. During actual application, the foregoing functions may be allocated to different functional modules for implementation depending on a requirement. To be specific, an internal structure of the apparatus is divided into different functional modules to implement all or some of the foregoing functions. In addition, the apparatuses provided in the foregoing embodiments and the corresponding method embodiments belong to a same concept. For a specific implementation process thereof, refer to the method embodiments. Details are not described herein again.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, the data block in this application is obtained under full authorization.

In an embodiment of the present disclosure, a computing system is further provided. The computing system includes a plurality of computing devices, and the computing device is configured to perform the data transmission method in collective communication in any one of the foregoing method embodiments.

In an embodiment of the present disclosure, a computer-readable storage medium is further provided. The storage-medium stores at least one instruction, and the instruction is read by a processor, to enable a computing device to perform the data transmission method in collective communication in any one of the foregoing method embodiments.

In an embodiment of the present disclosure, a computer program product is further provided. The computer program product includes computer instructions, and the computer instructions are stored in a computer-readable storage medium. A processor of a computing device reads the computer instructions from the computer-readable storage medium, and the processor executes the computer instructions, to enable the computing device to perform the data transmission method in collective communication in any one of the foregoing method embodiments.

The foregoing embodiments describe an example of the data transmission method in collective communication and the system provided in this application. In addition to the structure of the computing device provided in the foregoing embodiment, the structure of the computing device in this application may be one or a combination of the following several structures. The following describes another possible structure of the computing device.

In some possible embodiments, the computing device may be implemented as a virtualized device.

For example, the virtualized device may be a virtual machine (virtual machine, VM) on which a program for a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the computing device. For example, the computing device may be implemented based on a general-purpose physical server in combination with a network functions virtualization (network functions virtualization, NFV) technology. The computing device is a virtual host, a virtual router, or a virtual switch. A person skilled in the art may virtually create, on a general-purpose physical server by reading this application, a computing device having the foregoing functions with reference to the NFV technology. Details are not described herein.

For example, the virtualized device may be a container, and the container is an entity indicating an isolated virtualized environment. For example, the container may be a docker container. The container may be configured as the computing device. For example, the computing device may be created by using a corresponding image. For example, two container instances, that is, a container instance proxy-container 1 and a container instance proxy-container 2, may be created for a proxy-container (a container that provides a proxy service) by using an image of the proxy-container. The container instance proxy-container 1 is provided as the computing device, and the container instance proxy-container 2 is provided as the computing device. When a container technology is used for implementation, the computing device may run by using a kernel of a physical machine, and a plurality of computing devices may share an operating system of the physical machine. Different computing devices may be isolated by using the container technology. A containerized computing device may run in a virtualized environment, for example, may run in a virtual machine, or a containerized computing device may directly run in the physical machine.

For example, the virtualized device may be a pod. The pod is a basic unit of Kubernetes (where Kubernetes is an open-source container orchestration engine of Google, and is referred to as K8s for short) for deploying, managing, and orchestrating a containerized application. The pod may include one or more containers. All containers in a same pod are usually deployed on a same host. Therefore, all the containers in the same pod may communicate with each other through the host, and may share storage resources and network resources of the host. The pod may be configured as the computing device. For example, specifically, a container as a service (container as a service, CaaS, a container-based PaaS service) may be instructed to create the pod, and the pod is provided as the computing device.

Certainly, the computing device may alternatively be another virtualized device. Examples are not listed herein one by one.

**In** some possible embodiments, the computing device may alternatively be implemented by using a general-purpose processor. For example, the general-purpose processor may be in a form of a chip. Specifically, the general-purpose processor implementing the computing device includes a processing circuit, and an input interface and an output interface that are internally connected to and communicate with the processing circuit. The processing circuit is configured to perform the packet generation step in the foregoing method embodiments through the input interface. The processing circuit is configured to perform the receiving step in the foregoing method embodiments through the input interface. The processing circuit is configured to perform the sending step in the foregoing method embodiments through the output interface. Optionally, the general-purpose processor may further include a storage medium. The processing circuit is configured to perform the storage step in the foregoing method embodiments by using the storage medium. The storage medium may store instructions executed by the processing circuit. The processing circuit is configured to execute the instructions stored in the storage medium, to perform the foregoing method embodiments.

In a possible product form, the computing device in embodiments of this application may be further implemented through the following: one or more field programmable gate arrays (field programmable gate arrays, FPGAs), a programmable logic device (programmable logic device, PLD), a controller, a state machine, gate logic, a discrete hardware component, any other suitable circuit, or any combination of circuits capable of performing various functions described throughout this application.

In some possible embodiments, the computing device may be further implemented by using a computer program product. Specifically, an embodiment of this application provides a computer program product. When the computer program product runs on a computing device, the computing device is enabled to perform the data transmission method in collective communication in the foregoing method embodiments.

It should be understood that the computing devices in the foregoing product forms each have any function of the computing device in the foregoing method embodiments. Details are not described herein.

A person of ordinary skill in the art may be aware that, in combination with the examples described in embodiments disclosed in this specification, method steps and units may be implemented by using electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments in this application.

**In** addition, functional units in embodiments of this application may be integrated into one processing unit, each of the units may exist alone physically, or two or more units are integrated into one unit. The integrated unit may be implemented in a form of hardware, or may be implemented in a form of a software unit.

When the integrated unit is implemented in a form of a software functional unit and sold or used as an independent product, the integrated unit may be stored in a computer-readable storage medium. Based on this understanding, the technical solutions of this application essentially, or the part contributing to a conventional technology, or all or some of the technical solutions may be implemented in a form of a software product. The computer software product is stored in a storage medium, and includes several instructions for instructing a computer device (which may be a personal computer, a server, a computing device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of various examples, a first image may be referred to as a second image, and similarly, the second image may be referred to as the first image. Both the first image and the second image may be images, and in some cases may be separate and different images.

**In** this application, the term "at least one" means one or more, and the term "a plurality of" in this application means two or more. For example, a plurality of second packets means two or more second packets. The terms "system" and "network" are often used interchangeably in this specification.

It should be further understood that the term "if" may be interpreted as "when" ("when" or "upon"), "in response to determining", or "in response to detecting". Similarly, depending on the context, the expression "if determining..." or "if [the stated condition or event] is detected" may be interpreted as "when it is determined that..." or "in response to determining..." or "when [the stated condition or event] is detected" or "in response to detecting [the stated condition or event]".

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer program instructions. When the computer program instructions are loaded and executed on a computer, the procedures or functions according to embodiments of this application are all or partially generated. The computer may be a general-purpose computer, a dedicated computer, a computer network, or other programmable apparatuses.

The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium accessible by the computer, or a data storage device, like a server or a data center that integrates one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive), or the like.

A person of ordinary skill in the art may understand that all or some of the steps of embodiments may be implemented by using hardware or a program instructing related hardware. The program may be stored in a computer-readable storage medium. The storage medium may include: a read-only memory, a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A data transmission method in collective communication, applied to a computing system, wherein the computing system comprises a plurality of computing devices, and the method comprises:
obtaining, by a first computing device in the plurality of computing devices, a send index list of the first computing device, wherein the send index list indicates information about a second computing device corresponding to each of a plurality of data blocks to be sent by the first computing device, the information about the second computing device indicates a computing device that receives each data block, a quantity of second computing devices is N, and N is a positive integer greater than or equal to 2;
separately sending, by the first computing device, the plurality of data blocks to the N second computing devices based on the send index list; and
separately receiving, by the N second computing devices, the plurality of data blocks, wherein data blocks received by each second computing device are consecutive data blocks.

2. The method according to claim 1, wherein the N second computing devices comprise the first computing device.

3. The method according to claim 2, wherein a number is set for each second computing device, and the separately sending, by the first computing device, the plurality of data blocks to the N second computing devices based on the send index list comprises:
determining, by the first computing device based on the send index list and the numbers of the second computing devices, a sequence of sending the plurality of data blocks to the N second computing devices, wherein the first computing device first sends a data block to the first computing device.

4. The method according to claim 3, wherein the send index list comprises a plurality of rows, each row indicates first storage locations, on the first computing device, of X data blocks to be sent to one second computing device, and X is a positive integer greater than or equal to 1; and
the separately sending, by the first computing device, the plurality of data blocks to the N second computing devices based on the send index list comprises:
for any one of the second computing devices, obtaining, by the first computing device, the first storage locations of the X to-be-sent data blocks from a row corresponding to the second computing device in the send index list; and
obtaining the X data blocks from the first storage locations on the first computing device, and sending the X data blocks to the second computing device.

5. The method according to claim 1, wherein the method further comprises:
obtaining, by the second computing device, a receive index list of the second computing device, wherein the receive index list indicates information about a first computing device corresponding to Y data blocks received by the second computing device, and Y is a positive integer greater than or equal to 1; and
the separately receiving, by the N second computing devices, the plurality of data blocks comprises:
separately storing, by the second computing devices based on the receive index list, the data blocks sent by the first computing device.

6. The method according to claim 5, wherein the receive index list comprises a plurality of rows, each row indicates second storage locations, on the second computing device, of Y data blocks received from at least one first computing device; and
the separately storing, by the second computing devices based on the receive index list, the data blocks sent by the first computing device comprises:
receiving, by the second computing devices, the data blocks from the first computing device;
obtaining, by the second computing devices from a row corresponding to the first computing device in the receive index list based on the first computing device, second storage locations used for storing the data blocks; and
storing, by the second computing devices, the data blocks at the second storage locations.

7. A computing system, wherein the system comprises a plurality of computing devices;
a first computing device in the plurality of computing devices is configured to obtain a send index list of the first computing device, wherein the send index list indicates information about a second computing device corresponding to each of a plurality of data blocks to be sent by the first computing device, the information about the second computing device indicates a computing device that receives each data block, a quantity of second computing devices is N, and N is a positive integer greater than or equal to 2;
the first computing device is further configured to separately send the plurality of data blocks to the N second computing devices based on the send index list; and
the N second computing devices are configured to separately receive the plurality of data blocks, wherein data blocks received by each second computing device are consecutive data blocks.

8. The system according to claim 7, wherein the N second computing devices comprise the first computing device.

9. The system according to claim 8, wherein a number is set for each second computing device, and the first computing device is configured to determine, based on the send index list and the numbers of the second computing devices, a sequence of sending the plurality of data blocks to the N second computing devices, wherein the first computing device first sends a data block to the first computing device.

10. The system according to claim 9, wherein the send index list comprises a plurality of rows, each row stores first storage locations, on the first computing device, of X data blocks to be sent to one second computing device, and X is a positive integer greater than or equal to 1; and
the first computing device obtains the first storage locations of the X to-be-sent data blocks from a row corresponding to the second computing device in the send index list, obtains the X data blocks from the first storage locations on the first computing device, and sends the X data blocks to the second computing device.

11. The system according to claim 7, wherein the second computing device is further configured to obtain a receive index list of the second computing device, wherein the receive index list indicates information about a first computing device corresponding to Y data blocks received by the second computing device, and Y is a positive integer greater than or equal to 1; and
the second computing devices are configured to separately store, based on the receive index list, the data blocks sent by the first computing device.

12. The system according to claim 11, wherein the receive index list comprises second storage locations of the Y data blocks on the second computing device and the information about the first computing device corresponding to the Y data blocks received by the second computing device; and
the second computing device is configured to: receive a data block from the first computing device; obtain, from a row corresponding to the first computing device in the receive index list based on the first computing device, a second storage location used for storing the data block; and store the data block at the second storage location.

13. A computer-readable storage medium, wherein the storage medium stores at least one instruction, and the instruction is read by a processor, to enable a computing device to perform the method according to any one of claims 1 to 6.

14. A computer program product, wherein the computer program product comprises computer instructions, the computer instructions are stored in a computer-readable storage medium, a processor of a computing device reads the computer instructions from the computer-readable storage medium, and the processor executes the computer instructions, to enable the computing device to perform the method according to any one of claims 1 to 6.
